# EUROPÄISCHE PATENTANMELDUNG

(11) **EP 2 383 498 A2**
(43) Veröffentlichungstag der Anmeldung: **02.11.2011**
(21) Anmeldenummer: 11450056.4
(22) Anmeldetag: 26.04.2011
(51) Int. Cl.: F16L 11/02, F16L 55/165

(54) **Dichtschlauch**

(30) Priorität: 30.04.2010 AT 7382010
(71) Anmelder: Kübel, Johann, 3072 Kasten (AT)
(72) Erfinder: Kübel, Johann, 3072 Kasten (AT)
(74) Vertreter: Wildhack, Andreas

(57) **Zusammenfassung**

Die Erfindung betrifft einen Dichtschlauch zur Innenauskleidung von Fluidleitungen, umfassend zumindest eine mit, vorzugsweise gelartig bzw. eingedickte Konsistenz aufweisendem, Kunstharz (5) imprägnierte oder getränkte, schlauchförmige Gewebelage (6, 7), deren in Umfangsrichtung verlaufende Schussbänder oder -fäden (3) mit Glasfasern oder -fäden gebildet sind und deren in Längsrichtung des Dichtschlauches (1) verlaufende Kettbänder oder -fäden (2) mit, gegebenenfalls elastisch dehnbaren, Glas-und/oder Gummi- und/oder Kunststofffäden gebildet sind (Fig 1).

## Beschreibung

Die Erfindung betrifft einen Dichtschlauch gemäß dem Oberbegriff des Patentanspruchs 1. Ziel der Erfindung ist es, einen Dichtschlauch zu erstellen, mit dem in einfacher Weise eine Innenauskleidung von undichten Fluidleitungen erfolgen kann. Ein derartiger Dichtschlauch wird an die Innenwandung einer Fluidleitung angelegt und mit einem Ballon gegen die Wandung der Fluidleitung gedrückt. Daraufhin wird das UV- oder mit Mikrowellen aushärtbare Kunstharz, mit dem das Gewebe des Dichtschlauches imprägniert ist, ausgehärtet und damit der Dichtschlauch dichtend an der Innenwandung der Fluidleitung in Lage gehalten.

Der Einsatz von Dichtschläuchen zur Abdichtung von Fluidleitungen ist bekannt. Bekannte Dichtschläuche für diesen Zweck besitzen eine Schicht aus Fasern, die mit Kunstharz imprägniert ist und in Anlage an der Innenwandung einer Fluidleitung mit UV-Licht ausgehärtet werden. Des weiteren erfolgt das Abdichten von Fluidleitungen durch das Anlegen und Ankleben von mit Kunstharzen imprägnierten Glasfasermatten, die in entsprechender Stärke ausgebildet an die Innenwandung der Fluidleitung angelegt und dort ausgehärtet werden. Des weiteren sind mit Kunstharzen getränkte Filze bekannt, die an die Innenwandung von Fluidleitungen angelegt und ausgehärtet werden, um damit Leckagen abzudichten.

Der Nachteil der bekannten Dichtungen bzw. Dichtschläuche liegt darin, dass diese nicht einfach handhabbar sind und nicht die erforderliche Dichtigkeit gewährleisten. Des weiteren besitzen die bekannten Dichtungen ein beträchtliches Gewicht und die Herstellung und Lagerung, der Transport und das Einbringen bzw. Positionieren der Dichtschläuche sind aufwendig bzw. bringen Probleme bei der Handhabung.

Überdies besitzen die herkömmlichen Dichtschläuche Nachteile in Hinblick auf Ihre Anpassbarkeit an die in den Fluidleitungen vorliegenden Bedingungen, insbesondere bei Kanten und Vertiefungen, und neigen zu Undichtigkeiten.

Erfindungsgemäß ist somit ein Dichtschlauch zur Innenauskleidung von Fluidleitungen, insbesondere Abwasserleitungen, vorgesehen, so wie dieser im Anspruch 1 charakterisiert ist.

Ein derartiger Dichtschlauch ist gewichtsmäßig leicht und einfach herstellbar. Die Kettbänder oder -fäden bzw. Schussbänder oder -fäden sind mit einem eine gelartige Konsistenz aufweisenden Kunstharz impägniert. Derart impägniertes Gewebe aufweisende Dichtschläuche sind gut lagerbar und transportierbar, ohne dass dabei ein Austritt von Kunstharz zu befürchten ist oder die Schussbänder bzw. Kettbänder an Kunstharz verarmen. Durch die Leichtigkeit der Schussbänder und Kettbänder besitzt der erfindungsgemäße Dichtschlauch insgesamt geringes Gewicht; trotzdem besitzt er aufgrund der gewählten Materialien hohe Festigkeit und im ausgehärteten Zustand beste Lagestabilität und Dichtigkeit.

Die Dichtigkeit des Dichtschlauches und dessen Handhabung wird verbessert, wenn vorgesehen ist, dass über die Innenwandfläche der mit Kunstharz imprägnierten Gewebelage eine durchgehende bzw. sich über gesamte Innenwand erstreckende Schicht aus wasserdichtem Kunststoff aufgebracht, vorzugsweise aufgesprüht, ist. Die Schicht ist mechanisch durch Verankerung und/oder durch Klebung des Kunststoffes der Schicht in bzw. an die Schussbänder oder -fäden und/oder Kettbänder oder -fäden fest angebunden.

Durch die aufgebrachte Schicht aus wasserdichtem Kunststoff wird auch für komplexe Anwendungsfälle ausreichende Dichtigkeit bei gleichzeitig höchster Flexibilität des Dichtschlauches gewährleistet. Der Dichtschlauch ist mit einem aufblasbaren, ins Innere des Dichtschlauches einbringbaren Ballon an Wandunebenheiten anpressbar und dichtet damit Leckagen auch bei nicht glattem Untergrund vollständig ab. Die Schicht aus wasserdichtem Kunststoff kann an die Innenwandfläche der Gewebelage durch Aufsprühen oder auch durch thermisches Auftragen einer Kunststoffschicht, beispielsweise Aufschmelzen, ausgebildet werden. Es ist dabei wesentlich, dass sich diese Schicht mechanisch bzw. durch Verkleben mit den Schussbändern oder -fäden und/oder auch den Kettbändern oder -fäden verbindet. Das Aufbringen der Schicht erfolgt vorteilhaft auf die noch nicht mit Kunstharz getränkte invertierte Gewebelage erfolgen, allenfalls in invertiertem Zustand des Gewebeschlauches.

Für eine Materialwahl ist es vorteilhaft, wenn die Kettbänder oder -fäden mit PU oder PE gebildet sind.

Eine einfache Herstellung des Dichtschlauches ergibt sich, wenn die Gewebelage rund-gestrickt oder rund-gewebt ist oder wenn die Gewebelage die Form eines zu einem Schlauch bzw. Zylinder gerollten Flachbandes besitzt, dessen in Schlauchlängsrichtung verlaufende Kantenbereiche einander überlappen und verbunden sind. Sobald die Gewebelage rund-gewebt vorliegt, wird dieser hergestellte rund-gewebte Schlauch beim mit der Schicht aus Kunststoff versehen und danach mit dem UV-aushärtbaren oder mikrowellenaushärtbaren Kunstharz imprägniert. Auch wenn die Gewebelage in Form eines flachen Zuschnittes bzw. Flachbandes erstellt wird, erfolgt die Imprägnierung erst nach Aufbringen der Schicht aus Kunststoff auf die im Gebrauch innen liegende Wandfläche der Gewebelage.

In Hinblick auf eine einfache Herstellung bzw. Erzielung guter Festigkeitswerte kann vorgesehen sein, dass die Schussbänder oder -fäden in Ebenen senkrecht zur Längsachse des Dichtschlauches verlaufen oder insbesondere rund-gestrickt oder rund-gewebt sind und bezüglich einer derartigen Ebene längs des Umfangs des Dichtschlauches pro Umlauf eine Steigung aufweisen, die maximal der zehnfachen, vorzugsweise maximal der achtfachen, Breite eines Schussbandes oder -fadens entspricht, wobei vorzugsweise die Steigung der Schussbänder oder -fäden pro Umlauf eines Schussbandes oder -fadens 2 bis 12 mm, vorzugsweise 4 bis 8 mm, beträgt.

Es ergibt sich damit eine kontinuierliche Herstellbarkeit der Gewebelage, wobei die hergestellte rund-gestrickte Gewebelage direkt in einer Folgestation mit der Schicht aus Kunststoff und mit Kunstharz imprägniert werden kann. Diese kontinuierliche Herstellung bietet die Möglichkeit der Erstellung von Dichtschläuchen großer Länge, beispielsweise von mehr als 100m.

Für den Transport bzw. die Lagerung und den Einbau kann es von Vorteil sein, wenn auf der Außenwandfläche der mit Kunstharz imprägnierten Gewebelage eine Kunststofffolie, vorzugsweise aus PVC oder PP, auf- bzw. angebracht ist, die letztlich mit eingebaut wird.

Es ist von Vorteil, wenn die Mantelstärke des Dichtschlauches 1,5 bis 4 mm beträgt. Als Kunstharz für die Imprägnierung der Gewebelage können alle UV oder mit Mikrowellen aushärtbaren Kunstharze eingesetzt werden.

Im folgenden wird die Erfindung anhand der Zeichnung, beispielsweise näher erläutert.

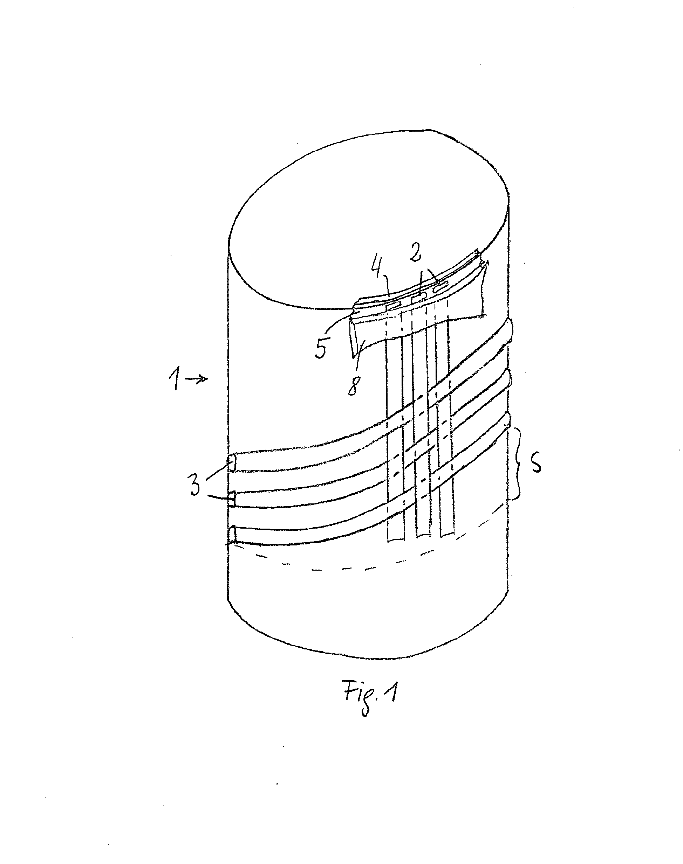

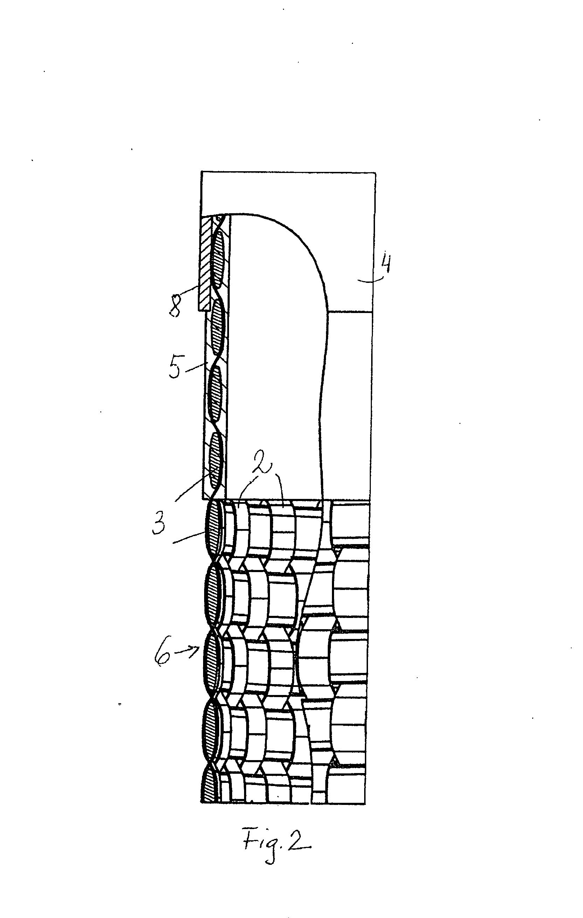

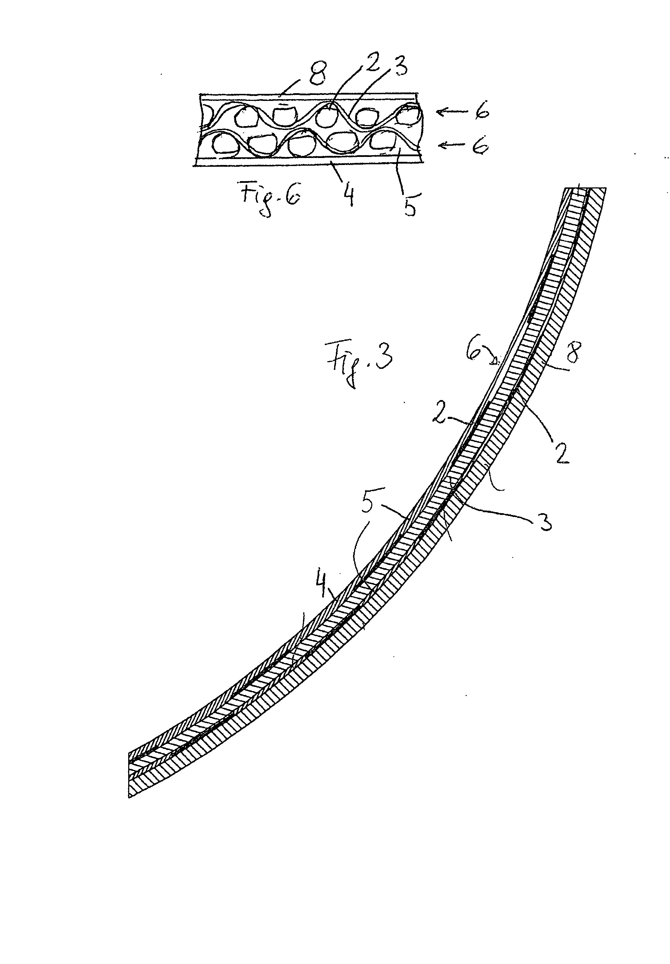

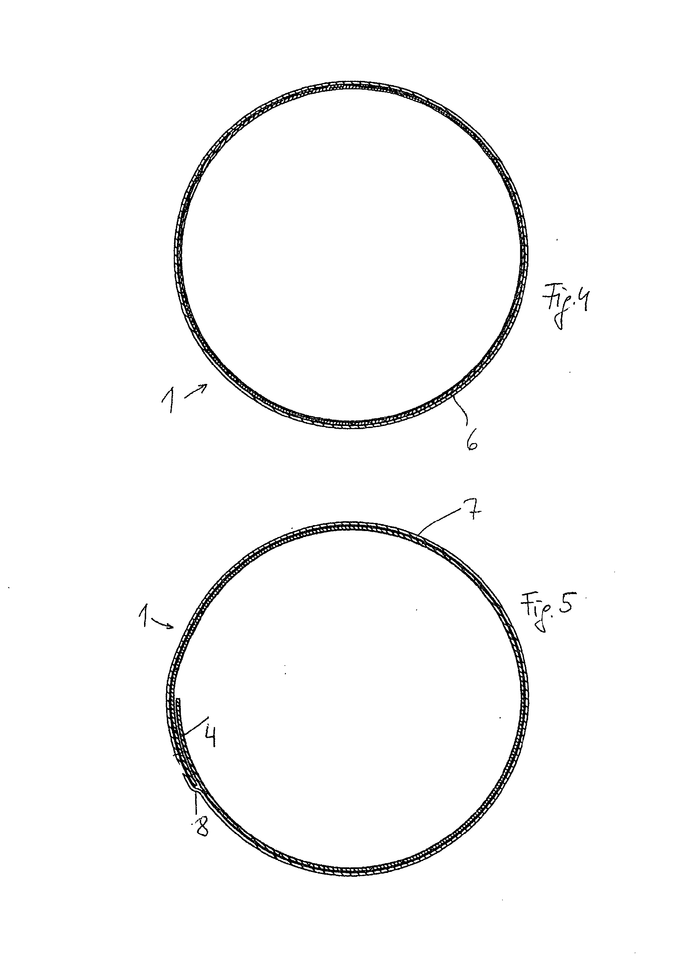

Fig. 1 zeigt schematisch einen Aufbau eines Dichtschlauches. Fig. 2 zeigt eine Detailansicht des Dichtschlauches in einem Detailschnitt. Fig. 3 zeigt einen Schnitt senkrecht zur Längsrichtung eines erfindungsgemäßen Dichtschlauches. Fig. 4 zeigt einen Dichtschlauch mit einer rund-gewebten Gewebelage. Fig. 5 zeigt einen Dichtschlauch umfassend eine ebene Gewebelage, die zu einem Schlauch verformt bzw. gerollt wurde. Fig. 6 zeigt einen Detailschnitt durch einen Dichtschlauch mit zwei Gewebelagen.

Fig. 1 zeigt einen Abschnitt eines erfindungsgemäßen Dichtschlauches 1. In Längsrichtung des Dichtschlauches 1 erstrecken sich Kettbänder oder -fäden 2, zu denen Schussbänder oder -fäden 3 querverlaufend angeordnet sind. Dieses Gewebe ist mit Kunstharz 5 imprägniert bzw. getränkt.

Im Folgenden werden Kettbänder und Kettfäden 2 jeweils als gleichwertig und Schussbänder und Schussfäden 3 jeweils als gleichwertig angesehen und es wird immer nur auf Kettbänder und Schussbänder Bezug genommen. Die Bänder werden mit Fäden oder Fasern aus Kunststoff oder Glas mit der gewünschten Anzahl und Stärke erstellt, um die gewünschten Festigkeitseigenschaften zu erhalten.

Die Gewebelage, umfassend die Kettbänder 2 und die Schussbänder 3, ist mit mikrowellen-aushärtbaren oder UV-aushärtbaren Kunstharz imprägniert bzw. getränkt. Dieses Kunstharz 5 besitzt eine eingedickte oder gelartige Konsistenz und tritt somit aus der Gewebelage 6, 7 nicht aus.

Wie in den Fig. 4 und 5 dargestellt, kann eine Gewebelage 6 rund-gewebt sein, oder es kann eine Gewebelage 7 erstellt werden, die zur Erstellung eines Dichtschlauches 1 in den in Längsrichtung des Dichtschlauches 1 verlaufenden Kantenbereichen 8 überlappt ist und damit einen Schlauch ausbildet.

Wie aus Fig. 1 ersichtlich ist, ist die Gewebelage 6 oder 7 innen vollständig mit einer durchgehenden bzw. sich über die gesamte Innenwandfläche erstreckenden Schicht 4 aus wasserdichtem Kunststoff versehen. Dieser Kunststoff ist zumindest mit den Schussbändern 3 mechanisch verbunden und/oder mit diesen verklebt. Eine entsprechende Verbindung kann auch mit den Kettfäden 2 erfolgen, sofern eine entsprechende Haftverbindung zwischen dem für die Schicht 4 eingesetzten Kunststoff und dem Material der Kettbänder 2 ausgebildet werden kann.

Aus Fig. 1 ist ersichtlich, dass die Schussbänder 3 nicht in einer Ebene senkrecht zur Längsrichtung des Dichtschlauches 1 verlaufen, sondern eine in Bezug auf eine zur Längsrichtung des Dichtschlauches 1 senkrechten Ebene senkrecht verlaufende Steigung S besitzen. Es ist dazu vorgesehen, dass die Schussbänder oder -fäden 3 in Ebenen senkrecht zur Längsachse des Dichtschlauches verlaufen, insbesondere rund-gestrickt oder rund-gewebt sind, und gegebenenfalls bezüglich einer derartigen Ebene längs des Umfangs des Dichtschlauches pro Umlauf eine Steigung S aufweisen, die maximal der zehnfachen, vorzugsweise maximal der achtfachen, Breite eines Schussbandes 3 entspricht, wobei vorzugsweise die Steigung der Schussbänder 3 pro Umlauf eines Schussbandes 3 2 bis 12 mm, vorzugsweise 4 bis 8 mm, beträgt.

Aus Fig. 1 ist ersichtlich, dass die Schussbänder 3 und die Kettbänder 2 unterschiedlich große Querschnittsfläche besitzen, wobei die Querschnittfläche der Schussbänder 3 vorteilhafterweise größer ist als die der Kettbänder 2.

Durch Wahl der Abmessungen der Kettbänder 2 und Schussbänder 3 und deren Querschnittsfläche sind die Flexibilität und Dehnbarkeit beeinflussbar.

Für den praktischen Einsatz zeigte es sich von Vorteil, wenn die Schicht 4 mit wasserdichtem Kunststoff mit PU, PVC, PP oder PE gebildet ist und vorteilhafterweise eine Dicke von 0,1 bis 0,5 mm, vorzugsweise von 0,1 bis 0,3 mm, besitzt bzw. wenn mit Glasfasern erstellte Kettbänder 2 in Umfangsrichtung der Gewebelage 6, 7 eine Breite von 1 bis 5 mm, vorzugsweise 3 bis 4 mm, besitzen und eine Dicke von 0,1 bis 0,6 mm, vorzugsweise 0,3 bis 0,5 mm, aufweisen, und/oder wenn mit Kunststofffasern erstellte Kettbänder 2 in Umfangsrichtung der Gewebelage 6, 7 eine Breite von 1 bis 8 mm, vorzugsweise 1 bis 6 mm, besitzen und eine Dicke von 0,1 bis 0,5 mm, vorzugsweise von 0,2 bis 0,4 mm, aufweisen, oder wenn aus Gummi oder elastisch dehnbaren Kunststoff hergestellte, insbesondere runde, Kettbänder 2 einen Durchmesser von 0,1 bis 2 mm, vorzugsweise 0,3 bis 1,5 mm, aufweisen. Je nach Anwendungsfall werden die Parameter angepasst.

Es ist des weiteren von Vorteil, wenn die Schussbänder 3 eine Breite von 2 bis 8, vorzugsweise von 3 bis 6 mm, und eine Dicke von 0,5 bis 3,5 mm, vorzugsweise von 1 bis 3 mm, besitzen.

Die zuvor angegebenen Abmessungen ergeben bei einer gewünschten bzw. ausreichenden Stärke bzw. Widerstandsfähigkeit des Dichtschlauches einen leichtgewichtigen, flexiblen und durch UV-Licht oder Mikrowellen aushärtbaren Dichtschlauch, der den Ansprüchen in der Praxis gewachsen ist.

Zur Erhöhung der Festigkeitseigenschaften bzw. Verstärkung des Gewebes kann auch vorgesehen sein, dass jeder Schuss eine Mehrzahl von direkt nebeneinander liegenden bzw. nebeneinander eingebrachten bzw. gleich laufenden Schussbändern 3 umfasst.

Um eine entsprechende Festigkeit jedoch auch Biegsamkeit und Flexibilität des Dichtschlauches 1 zu erreichen, kann vorgesehen sein, dass die mit Glasfasern gebildeten Kettbänder 2 mit ECR-Glasfasern bzw. -fäden mit 600 bis 3200 tex, vorzugsweise 2000 bis 3000 tex, gebildet sind.

Fig. 2 zeigt eine Detailansicht einer Wandung des Dichtschlauches 1 und man erkennt die Schussfäden 3, die mit den Kettfäden 2 rund-verwebt sind. Diese rund-gewebte Gewebelage 6 ist in eine Schicht aus UV-aushärtbaren Kunstharz 5 eingelagert und an der Innenwandseite mit einer Schicht 4 aus wasserdichtem Kunststoff abgedeckt. An der Außenseite des Dichtschlauches bzw. der Gewebelage 6 kann eine weitere Kunststofffolie 8 ablösbar aufgebracht sein.

In Fig. 3 ist ein Detailschnitt durch einen erfindungsgemäßen Dichtschlauch 1 in einer Ebene senkrecht zur Längsrichtung des Dichtschlauches 1 dargestellt. Man erkennt die mit Kunstharz 5 imprägnierte Gewebelage 6, umfassend die Kettbänder 2 und die Schussbänder 3, welche imprägnierte Gewebelage 6 nach innen zu mit der Schicht 4 aus wasserdichtem Kunststoff abgedeckt ist.

Beim Einbringen des Dichtschlauches 1 in eine Fluidleitung wird dieser auf eine entsprechende Länge zugeschnitten und in die Fluidleitung, beispielsweise mit Montagerobotern, eingebracht. Vor Ort bzw. vor dem abzudichtenden Bereich der Fluidleitung wird der Dichtschlauch, beispielsweise mit einem Ballon, aufgeblasen bzw. an die Innenwand der Fluidleitung angepresst und das Kunstharz 5 der Gewebelage 6 durch UV-Lichtbestrahlung oder mit Mikrowellenbestrahlung ausgehärtet. Auch ein thermisches Aushärten ist möglich.

In der folgenden Tabelle sind Abmessungen einiger für die Praxis hergestellter und vorteilhafterweise einsetzbarer Dichtschläuche 1 angegeben. Diese Dichtschläuche 1 leisten auch relativ großflächigen Undichtigkeiten in Fluidleitungen ausreichend Widerstand und verhindern ein Eindringen oder Austreten von Fluiden in die bzw. aus den Fluidleitungen, durch die aufgrund der Flexibilität des Dichtschlauches 1 mögliche gute und unveränderbar bleibende Anformung an die Innenwandungen.

**Tabelle:**

| Kettbänder | | Schussbänder | | | | |
|---|---|---|---|---|---|---|
| Breite (mm) | Dicke (mm) | Breite (mm) | Dicke (mm) | Material | Dicke der Außenschicht aus Kunststoff | gesamte Wandstärke (mm) |
| 2 | 0,3 | 4 | 0,8 | Glasfaser | 0,2 | 1,9 |
| 3 | 0,4 | 6 | 1,1 | Glasfaser | 0,2 | 2,9 |
| 4 | 0,5 | 7 | 1,5 | Kunststofffasern | 0,3 | 4,2 |

Aufgrund der gewählten Materialien ergibt sich eine vorteilhafte Flexibilität und Handhabbarkeit des Dichtschlauches 1, jedoch gleichzeitig auch die stabile Haltbarkeit und Festigkeit nach dem Aushärten. Insbesondere beim Einsatz von dehnbaren Kunststoffen oder Gummi, können größere Höhendifferenzen aufweisende Oberflächenstrukturen von Fluidleitungen optimal abgedichtet werden.

Insbesondere von Vorteil erweist es sich, dass die Schussbänder 3 sich im Wesentlichen gerade bzw. durch das Verweben im Wesentlichen unverformt durch die Kettbänder 2 über den Umfang des Dichtschlauches 1 erstrecken, sodass eine gute Verformbarkeit der Gewebelage 6, 7 bei Anbringung des Dichtschlauches im Inneren einer Fluidleitung vorliegt.

Beim Imprägnieren der Gewebelage wird dafür Sorge getragen, dass das zur Imprägnierung vorgesehene Kunstharz 5 auch in die bzw. zwischen die Fasern und Fäden der Bänder eindringt und insbesondere die Zwischenräume zwischen den Kettbändern 2 und den Schussbändern 3 bzw. zwischen den Bändern 2, 3 und der Schicht 4 aus Kunststoff ausfüllt.

Im Gegensatz zu bekannten Linern aus imprägniertem Gewebe zeigt der erfindungsgemäße Dichtschlauch 1 insbesondere Vorteile aufgrund der speziellen Anordnung, Materialien und Abmessungen der Schussbänder 3 und Kettbänder 2. Ein beträchtlicher Vorteil ergibt sich vor allem aufgrund der auf die Innenfläche der Gewebelage aufgebrachten Schicht 4 aus wasserdichtem Kunststoff, sodass die mit aushärtbarem Kunstharz 5 getränkte Gewebelage vor allem zur Stabilität des Dichtschlauches 1 beiträgt und die Dichtigkeit des Dichtschlauches 1 durch die Schicht 4 aus wasserdichtem Kunststoff unterstützt bzw. mitbedingt ist.

Diese Schicht 4 aus wasserdichtem Kunststoff ist im ausgehärteten Zustand fest mit dem ausgehärteten Kunstharz 5 der Gewebelage verbunden und bietet zusätzlich zur Gewebeschicht hervorragende Dichtigkeits- und Festigkeitseigenschaften.

Letztlich betrifft die Erfindung auch abgedichtete bzw. sanierte Rohrstücke, deren Innenwandung mit einem erfindungsgemäßen Dichtschlauch abgedichtet bzw. verkleidet ist.

Es ist möglich mehrere Gewebelagen 6, so wie in Fig. 6 dargestellt, übereinander anzuordnen, um die Dicke der Wandstärke des Dichtschlauches 1 zu erhöhen. Bei der Herstellung eines derartigen Dichtschlauches wird über eine innere Gewebelage 6 eine weitere, mit Kunstharz imprägnierte oder getränkte schlauchförmige Gewebelage aufgebracht und gemeinsam werden die beiden Gewebelagen 6 ausgehärtet. Nach innen zu, das heißt in Richtung auf die im Gebrauch in das Rohrinnere weisende Fläche der Gewebelage, kann die Schicht 4 aus wasserdichtem Kunststoff aufgebracht sein. An der Außenfläche der Gewebelagen 6 kann eine Kunststofffolie 8 angebracht sein. Es ist durchaus möglich auch mehr als zwei Gewebelagen, die mit UV-aushärtbarem oder mit mikrowellenaushärtbarem Kunstharz gebildet sind, übereinander anzuordnen, um eine entsprechend dicke und widerstandsfähige Wandstärke zu erreichen. Auch ein Dichtschlauch mit einer Mehrzahl von Gewebelagen kann ohne Schwierigkeiten in eine auszukleidende Fluidleitung eingebracht werden und vor Ort an die Innenwandung der Fluidleitung angelegt bzw. angedrückt und ausgehärtet werden.

Für eine Verbindung der Gewebelagen sind keine sonderlichen Vorkehrungen zu treffen, da die imprägnierten bzw. getränkten Gewebelagen gut und vollflächig miteinander verbunden werden können.

Von Vorteil und bedeutsam ist es, wenn die Schussbänder oder -fäden nicht dehnbar ausgeführt sind, wie dies bei Glasfasern der Fall ist. Die Schussbänder oder - fäden verbleiben statisch, wogegen sich die Kettbänder oder -fäden dehnen, insbesondere elastisch dehnen können.

Die Schussbänder oder -fäden sind steif, das heißt wesentlich steifer als die Kettbänder oder -fäden, sodass die Schussbänder oder -fäden die Umfangsfläche des Dichtschlauches definieren und die Kettbänder oder -fäden um die Schussbänder oder - fäden abwechselnd herum gelegt, insbesondere wellig gelegt, verlaufen, wie dies an Fig. 2 ersichtlich ist.

Wichtig ist die Kombination der dehnbaren Kettbänder oder -fäden aus Gummi oder Kunststoff mit den nicht dehnbaren, eher steifen Schussbändern oder -fäden aus Glasfaserfäden.

Die Auswahl der in einem Schussband oder -faden vorhandenen Glasfasern wird durch seine Abmessungen bzw. seinen gewünschten Querschnitt bestimmt.

## Patentansprüche

1. Dichtschlauch zur Innenauskleidung von Fluidleitungen, insbesondere Abwasserleitungen, umfassend zumindest eine mit, vorzugsweise gelartig bzw. eingedickte Konsistenz aufweisendem, Kunstharz (5) imprägnierte oder getränkte, schlauchförmige Gewebelage (6, 7), deren in Umfangsrichtung verlaufende Schussbänder oder -fäden (3) mit Glasfasern oder -fäden, insbesondere nur mit Glasfasern oder -fäden, gebildet sind und deren in Längsrichtung des Dichtschlauches (1) verlaufende Kettbänder oder -fäden (2) mit, gegebenenfalls elastisch dehnbaren, Glas-und/oder Gummi- und/oder Kunststofffäden gebildet sind.

2. Dichtschlauch nach Anspruch 1, **dadurch gekennzeichnet, dass** auf der im Gebrauch innenliegenden Innenwandfläche der mit Kunstharz (5) imprägnierten Gewebelage (6, 7) eine durchgehende bzw. sich über gesamte Innenwandfläche erstreckende Schicht (4) aus wasserdichtem Kunststoff aufgebracht, vorzugsweise aufgesprüht, ist, wobei gegebenenfalls die Schicht (4) mechanisch durch Verankerung und/oder durch Klebung des Kunststoffes der Schicht (4) in bzw. an den Schussbändern oder -fäden (3) und/oder Kettbändern oder -fäden (2) fest angebunden ist.

3. Dichtschlauch nach Anspruch 1 oder 2, **dadurch gekennzeichnet, dass** die Schussbänder oder -fäden (3) und die Kettbänder oder -fäden (2) unterschiedlich große Querschnittsfläche besitzen, wobei die Querschnittfläche der Schussbänder oder -fäden (3) vorteilhafterweise größer ist als die der Kettbänder oder -fäden (2).

4. Dichtschlauch nach einem der Ansprüche 1 bis 3, **dadurch gekennzeichnet, dass** die Kettbänder oder -fäden (2) mit PU oder PE gebildet sind.

5. Dichtschlauch nach einem der Ansprüche 1 bis 4, **dadurch gekennzeichnet, dass** die Schicht (4) mit wasserdichtem Kunststoff mit PU, PVC, PP oder PE gebildet ist und vorteilhafterweise eine Dicke von 0,1 bis 0,5 mm, vorzugsweise von 0,1 bis 0,3 mm, besitzt.

6. Dichtschlauch nach einem der Ansprüche 1 bis 5, **dadurch gekennzeichnet, dass** die Gewebelage (6) rund-gestrickt oder rund-gewebt ist oder dass die Gewebelage (7) die Form eines zu einem Schlauch bzw. Zylinder gerollten Flachbandes besitzt, dessen in Schlauchlängsrichtung verlaufende Kantenbereiche (8) einander überlappen und im Überlappungsbereich miteinander verbunden sind.

7. Dichtschlauch nach einem der Ansprüche 1 bis 6, **dadurch gekennzeichnet, dass** die Schussbänder oder -fäden (3) in Ebenen senkrecht zur Längsachse des Dichtschlauches verlaufen oder insbesondere rund-gestrickt oder rund-gewebt sind und bezüglich einer derartigen Ebene längs des Umfangs des Dichtschlauches pro Umlauf eine Steigung (S) aufweisen, die gegebenenfalls maximal der zehnfachen, vorzugsweise maximal der achtfachen, Breite eines Schussbandes oder -fadens (3) entspricht, wobei vorzugsweise die Steigung der Schussbänder oder -fäden (3) pro Umlauf eines Schussbandes oder -fadens (3) 2 bis 12 mm, vorzugsweise 4 bis 8 mm, beträgt.

8. Dichtschlauch nach einem der Ansprüche 1 bis 7, **dadurch gekennzeichnet, dass** die Schussbänder bzw. -fäden (3) eine Breite von 2 bis 8 mm, vorzugsweise von 3 bis 6 mm, und eine Dicke von 0,5 bis 3,5 mm, vorzugsweise von 1 bis 3 mm, besitzen.

9. Dichtschlauch nach dem der Ansprüche 1 bis 8, **dadurch gekennzeichnet, dass** mit Glasfasern erstellte Kettbänder oder -fäden (2) in Umfangsrichtung der Gewebelage (6, 7) eine Breite von 1 bis 5 mm, vorzugsweise 3 bis 4 mm, besitzen und eine Dicke von 0,1 bis 0,6 mm, vorzugsweise 0,3 bis 0,5 mm, aufweisen,
und/oder dass mit Kunststofffasern erstellte Kettbänder oder -fäden (2) in Umfangsrichtung der Gewebelage (6, 7) eine Breite von 1 bis 8 mm, vorzugsweise 1 bis 6 mm, besitzen und eine Dicke von 0,1 bis 0,5 mm, vorzugsweise von 0,2 bis 0,4 mm, aufweisen,
oder
dass aus Gummi oder elastisch dehnbaren Kunststoff hergestellte, insbesondere runde, Kettbänder oder -fäden (2) einen Durchmesser von 0,1 bis 2 mm, vorzugsweise 0,3 bis 1,5 mm, aufweisen.

10. Dichtschlauch nach einem der Ansprüche 1 bis 9, **dadurch gekennzeichnet, dass** jeder Schuss eine Mehrzahl von direkt nebeneinander liegenden bzw. nebeneinander eingebrachten bzw. gleich laufenden Schussbändern oder -fäden (3) umfasst.

11. Dichtschlauch nach einem der Ansprüche 1 bis 10, **dadurch gekennzeichnet, dass** auf der im Gebrauch außen liegenden Außenwandfläche der mit Kunstharz (5) imprägnierten Gewebelage (6, 7) eine Kunststofffolie (8), vorzugsweise aus PVC oder PP, angebracht oder angebunden ist.

12. Dichtschlauch nach einem der Ansprüche 1 bis 11, **dadurch gekennzeichnet, dass** die Zwischenräume und Vertiefungen zwischen den Kettbändern oder -fäden (2) und den Schussbändern oder -fäden (3) und der Schicht (4) aus Kunststoff mit UV-aushärtbaren Kunstharz gefüllt sind.

13. Dichtschlauch nach einem der Ansprüche 1 bis 12, **dadurch gekennzeichnet, dass** die mit Glasfasern gebildeten Kettbänder oder -fäden (2) mit ECR-Glasfasern bzw. -fäden mit 600 bis 3200 tex, vorzugsweise 2000 bis 3000 tex, gebildet sind.

14. Dichtschlauch nach einem der Ansprüche 1 bis 13, **dadurch gekennzeichnet, dass** die Mantelstärke des Dichtschlauches (1) 1,5 mm bis 4 mm beträgt.

15. Dichtschlauch nach einem der Ansprüche 1 bis 14, **dadurch gekennzeichnet, dass** als Kunstharz (5) zur Erstellung der imprägnierten Gewebelage (6) mit Mikrowellen oder UV-Strahlung aushärtbare Harze eingesetzt sind.

16. Dichtschlauch nach einem der Ansprüche 1 bis 15, **dadurch gekennzeichnet, dass** die Wandung des Dichtschlauches (1) mit mehreren mit UV-aushärtbaren oder mikrowellenaushärtbaren Kunststoff (5) getränkten, übereinanderliegenden und miteinander verbundenen Gewebelagen (6) gebildet ist.

17. Rohr, insbesondere Abwasserrohrleitungsstück, **dadurch gekennzeichnet, dass** an der Innenwandfläche des Rohres bzw. Abwasserrohrleitungsstückes ein Dichtschlauch nach einem der Ansprüche 1 bis 16 dichtend angelegt bzw. angedrückt ist.
